Europäisches Patentamt

European Patent Office

Office européen des brevets

(19)

(11) Numéro de publication : **0 084 481**
**B1**

(12) **FASCICULE DE BREVET EUROPÉEN**

(45) Date de publication du fascicule du brevet :
**09.07.86**

(51) Int. Cl.⁴ : **G 21 C   3/34**

(21) Numéro de dépôt : **83400056.4**

(22) Date de dépôt : **11.01.83**

(54) **Grille d'espacement pour assemblage combustible de réacteur nucléaire comportant des points d'appui opposés deux à deux pratiqués sur des lamelles déformables élastiquement.**

(30) Priorité : 20.01.82 FR 8200834

(43) Date de publication de la demande :
**27.07.83 Bulletin 83/30**

(45) Mention de la délivrance du brevet :
**09.07.86 Bulletin 86/28**

(84) Etats contractants désignés :
**BE DE GB IT NL SE**

(56) Documents cités :
**FR-A- 2 200 587**
**GB-A- 1 129 103**
**GB-A- 2 000 896**
**US-A- 3 379 617**
**US-A- 3 679 547**
**US-A- 3 932 216**
**US-A- 4 137 125**

(73) Titulaire : **COMMISSARIAT A L'ENERGIE ATOMIQUE Etablissement de Caractère Scientifique Technique et Industriel**
**31/33, rue de la Fédération**
**F-75015 Paris (FR)**

(72) Inventeur : **Feutrel, Claude**
**105 Grande Rue**
**F-91430 Vauhallan (FR)**

(74) Mandataire : **Mongrédien, André et al**
**c/o BREVATOME 25, rue de Ponthieu**
**F-75008 Paris (FR)**

EP 0 084 481 B1

Jouve, 18, rue St-Denis, 75001 Paris, France

## Description

La présente invention a pour objet une grille d'espacement pour assemblage combustible de réacteur nucléaire.

Les grilles d'espacement ont pour rôle de réaliser l'espacement des crayons combustibles nucléaires dans un assemblage de réacteur nucléaire. Ces crayons doivent être maintenus parallèles selon un réseau déterminé, en assurant en outre leur appui selon différentes régions réparties en outre leur appui selon différentes régions réparties selon leur longueur, afin, en particulier, d'éviter leur vibration sous l'effet de la circulation d'un milieu liquide de refroidissement s'écoulant à leur contact.

On connaît déjà de nombreuses réalisations de grilles d'espacement du genre décrit ci-dessus, notamment constituées d'un montage formé de deux familles de tôles minces, respectivement parallèles dans chaque famille, et perpendiculaires d'une famille à l'autre, ces tôles étant échancrées à intervalles réguliers de façon à permettre leur emboîtement mutuel en délimitant ainsi les alvéoles de section carrée traversés chacun par un élément combustible du faisceau.

Des grilles de ce type comportent généralement des ressorts rapportés réalisés en un matériau différent de celui de la grille. Par exemple, le FR-A-2 397 042 décrit une grille d'espacement qui comporte des languettes ressorts présentant un profil en zig-zag qui comporte au moins deux bossages en appui respectivement contre les crayons traversant les deux alvéoles.

Cette grille est réalisée en zircaloy, et les ressorts en Inconel.

On a cherché à réaliser des grilles entièrement en zircaloy, ce qui évite l'utilisation de matériaux à haut pouvoir d'absorption des neutrons tout en permettant une construction plus simple de la grille d'espacement, puisque l'on supprime le montage de ressorts rapportés.

On a cherché d'abord à réaliser des grilles comportant des ressorts découpés directement dans les cloisons formant les parois des alvéoles. Mais les essais ont montré que ces ressorts ne permettaient pas de maintenir durablement les crayons combustibles en raison du phénomène de relaxation du zircaloy sous irradiation. Au bout d'un certain temps, l'effort de serrage des ressorts sur les crayons se relâche et ils ne sont plus maintenus.

La présente invention concerne précisément une grille d'espacement réalisée entièrement en un matériau présentant un faible pouvoir d'absorption des neutrons et d'une construction simple. Etant donné qu'il n'est pas possible d'assurer le serrage pendant la durée de vie des crayons, elle a simplement pour fonction d'assurer leur espacement. Il reste bien entendu nécessaire d'assurer la fonction de maintien des crayons. Mais ceci est obtenu par un autre moyen, qui ne fait pas partie de la présente invention. Il est essentiel d'assurer le contact sans jeu entre crayons combustibles et grilles, car tout jeu entre la grille et les crayons provoquerait l'usure de ces derniers, ce qu'il faut absolument éviter. Il est donc nécessaire de compenser les variations dimensionnelles dues aux tolérances de fabrication des grilles. L'invention résout ce problème par la présence de points d'appui opposés deux à deux pratiqués sur des lamelles déformables élastiquement.

Il convient par ailleurs de préciser que le brevet américain US-A-3 679 547 montre des grilles homogènes où sont pratiquées, dans une lamelle, deux bossages superposés par alvéole, situés chacun entre deux fentes verticales, et orientés en sens opposé par rapport à la lamelle, vers deux alvéoles voisines. Dans une telle réalisation, les couples de torsion dus à la présence des crayons sont transmis aux lamelles constituant les grilles ; ils provoquent des déformations des grilles préjudiciables à leur stabilité et à leur géométrie.

La présente invention pallie ces inconvénients.

Plus précisément, la présente invention concerne une grille d'espacement pour assemblage combustible de réacteur nucléaire, comportant un ensemble de deux familles de cloisons minces respectivement parallèles dans chaque famille et perpendiculaires d'une famille à l'autre, déterminant des alvéoles de section carrée traversées chacune par un crayon combustible du faisceau, des premiers points d'appui, constitués par des bossages pratiqués dans les parois de l'alvéole, pour maintenir les crayons combustibles du faisceau, ces bossages étant dirigés en sens opposés dans deux alvéoles adjacentes, caractérisée en ce qu'elle comporte des seconds points d'appui également pratiqués dans les parois de l'alvéole pour maintenir les crayons combustibles du faisceau et en ce que lesdits bossages sont profilés et pratiqués deux par deux sur une languette de tôle obtenue en découpant deux fentes parallèles longitudinales dans la cloison mince de part et d'autre desdits bossages, la réaction des crayons combustibles sur ces bossages après leur mise en place dans la grille produisant un couple de torsion sur la languette de tôle élastique, la déformation de cette languette permettant ainsi l'absorption des tolérances de montage des crayons combustibles dans la grille.

D'autres caractéristiques et avantages de l'invention apparaîtront à la lecture de la description qui suit, faite en référence aux figures annexées sur lesquelles :

la Figure 1 est une vue à grande échelle d'un assemblage combustible de réacteur nucléaire ;

les Figures 2 et 3 représentent respectivement une vue en perspective et une vue de dessus d'une grille conforme à l'invention.

la Figure 4 montre le détail de la grille de l'invention ;

la Figure 5 représente une variante de la réalisation de la Fig. 4.

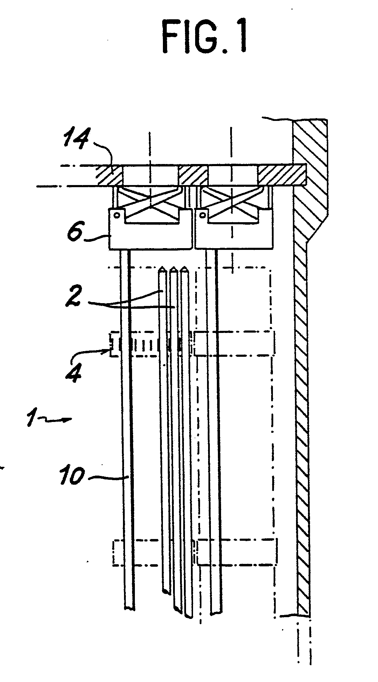

On a représenté sur la figure 1 une vue à grande échelle montrant schématiquement un assemblage combustible 1 de réacteur nucléaire dont les crayons combustibles 2 sont maintenus espacés par des grilles 4 conformes à l'invention réparties régulièrement le long des crayons combustibles. Chaque assemblage 1 comporte une armature rigide composée de deux pièces d'extrémité 6 munies d'orifices permettant le passage de l'eau de réfrigération qui circule de bas en haut. Un certain nombre de tubes guides 10 assurent la solidité de l'ensemble par leur fixation aux pièces d'extrémité 6. Chaque assemblage combustible 1 s'étend sur plusieurs mètres de long entre une plaque de cœur inférieure (non représentée) et une plaque de cœur supérieure 14 appartenant aux équipements internes de la cuve du réacteur. Chaque assemblage est positionné par rapport aux plaques de cœur.

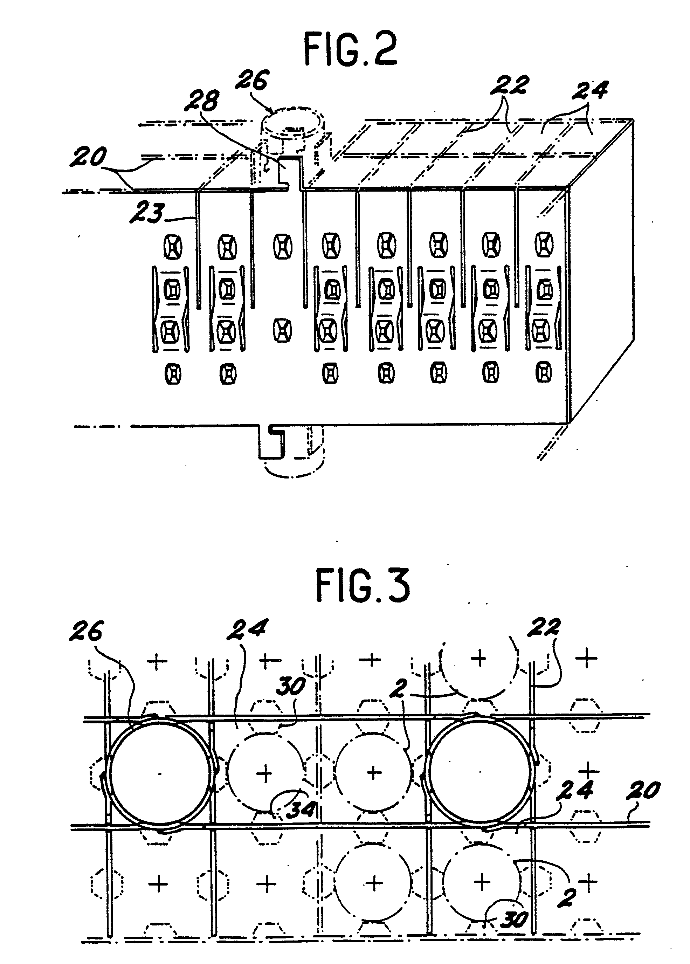

On a représenté sur la figure 2 une vue en perspective et sur la figure 3 une vue de dessus d'une grille conforme à l'invention.

Ces vues montrent les deux familles de tôles transversales 20 et 22, parallèles les unes aux autres dans une même famille et perpendiculaires entre elles d'une famille à l'autre, et munies d'échancrures 23 à intervalles réguliers, de telle sorte qu'elles délimitent une série d'alvéoles 24 dans lesquels s'engagent les crayons combustibles du faisceau. Des points d'appui 30 pratiqués dans les cloisons des alvéoles assurent le positionnement du faisceau des crayons combustibles.

Dans certaines alvéoles, des manchons cylindriques 26 soudés par soudure au laser ou T.I.G. à la grille par des pattes 28 découpées dans des tôles 20, 22, permettent le passage des tubes guides tels que 10.

Dans une grille de ce type, réalisée entièrement en un matériau qui n'est pas capable d'assurer le supportage des crayons combustibles 2, par exemple le zircaloy, il est nécessaire que les crayons soient supportés par un autre moyen, car la grille de l'invention n'assure pas ce supportage. Elle permet simplement l'espacement des crayons.

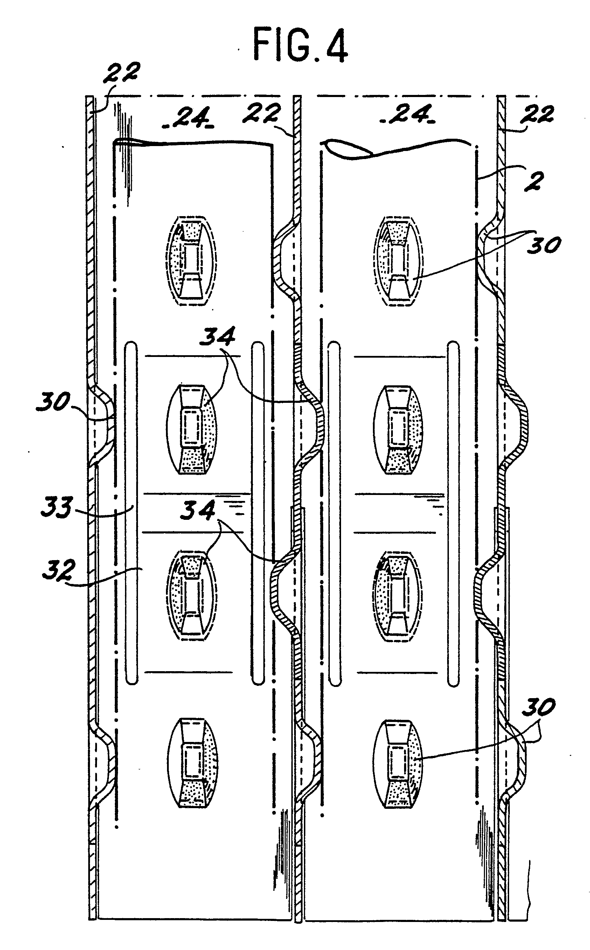

On a représenté sur la figure 4 une vue de détail de la grille de l'invention. Elle montre une vue en coupe et une vue de face des tôles.

On a pratiqué dans les cloisons des alvéoles des bossages qui viennent en appui contre le crayon combustible 2 schématisé en trait mixte. Ces bossages sont de deux types, d'une part des bossages rigides 30, et d'autre part des bossages 34 pratiqués sur une languette 32 déformable élastiquement.

Sur chaque cloison d'une alvéole, on a pratiqué quatre points d'appui superposés, deux points d'appui rigides 30 encadrant deux points d'appui de type élastique 34 situés sur une même languette élastique 32. Comme ces bossages sont communs à deux alvéoles adjacentes, il y a donc huit points d'appui dans chaque alvéole.

Les bossages 34 encore appelés bossages élastiques sont disposés sur une languette dégagée de la plaquette par deux fentes latérales continues ; ils font saillie de part et d'autre du plan de la cloison et donc de la languette 32 dans deux alvéoles 24 adjacentes comme on peut le voir sur les tôles 22 représentées de profil.

Les réactions des crayons combustibles 2 sur les points d'appui 34 sont donc opposées. Il s'ensuit un couple de torsion sur la languette de tôle 32 qui la déforme élastiquement. Cette déformation permet l'absorption des tolérances de fabrication des grilles et de montage des crayons dans le faisceau.

Les points d'appui rigides 30, comme les points d'appui élastiques 34, sont profilés afin de diminuer la résistance à l'écoulement du fluide de refroidissement qui circule à leur contact.

Par opposition aux grilles décrites dans le brevet américain 3 679 547, les grilles telles que représentées sur la figure 4, permettent à la fois d'éviter les déformations produites dans la cloison par la transmission latérale de l'effet de couple et de conditionner la déformation de la languette. Les réactions d'appui, dues à ce couple, sont normalement reprises aux points d'encastrement extrêmes de la languette. Il en résulte une normalisation des contraintes sur la structure de la grille constituée par les cloisons, qui conserve ainsi une configuration stable au cours de la relaxation du matériau utilisé.

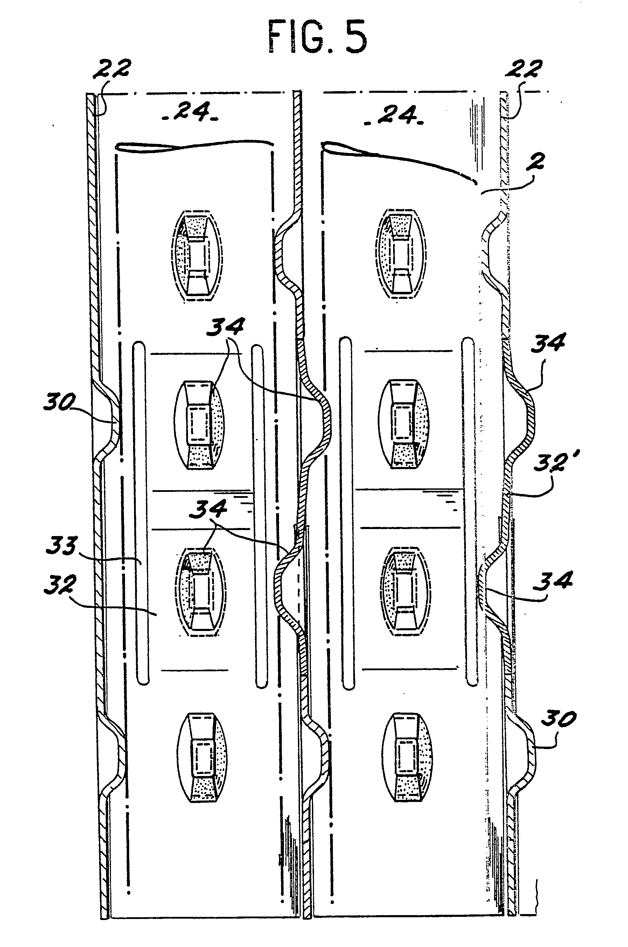

On a représenté sur la figure 5 une variante de réalisation de la grille représentée sur la figure 4. Cette variante se distingue par le fait que les languettes élastiques 32 sont légèrement cambrées à la fabrication. Elles présentent une déformation en S qui est l'inverse de la déformation qu'elles auront à subir lorsque les éléments combustibles seront mis en place dans la grille. Ce cambrage a pour but d'accentuer l'effet de la grille de la figure 4, c'est-à-dire de permettre d'absorber mieux les tolérances de fabrication de la grille et de montage des crayons plus importantes. Cette disposition confère un effet de voûte à la languette et celle-ci présente une raideur accrue aux efforts transmis par les bossages.

La grille de l'invention, d'une construction simple puisque ne nécessitant pas l'utilisation de ressort rapportés, assure la cohésion d'ensemble du réseau par l'interférence des points d'appui entre les alvéoles adjacentes. Elle assure la compensation des tolérances de fabrication par déformation des appuis et permet donc le maintien sans jeu des crayons combustibles de l'assemblage.

Lorsqu'elle est réalisée en un matériau, tel que le zircaloy qui, sous irradiation, subit un phénomène de relaxation et qu'elle n'applique plus, au bout d'un certain temps, de serrage sur les crayons, ce maintien sans jeu est sauvegardé, pendant toute la durée du fonctionnement de l'assemblage combustible.

**Revendications**

1. Grille d'espacement pour assemblage combustible de réacteur nucléaire, comportant un ensemble de deux familles de cloisons minces (20, 22) respectivement parallèles dans chaque famille et perpendiculaires d'une famille à l'autre, déterminant des alvéoles (24) de section carrée traversées chacune par un crayon combustible (2) du faisceau, des premiers points d'appui constitués par des bossages (34) pratiqués dans les parois de l'alvéole (24) pour maintenir les crayons combustibles du faisceau, ces bossages (34) étant dirigés en sens opposés dans deux alvéoles (24) adjacentes, caractérisée en ce qu'elle comporte des seconds points d'appui (30) également pratiqués dans les parois de l'alvéole (24) pour maintenir les crayons combustibles du faisceau et en ce que lesdits bossages (34) sont profilés et pratiqués deux par deux dans la direction longitudinale, sur une languette de tôle (32) obtenue en découpant deux fentes parallèles (33) longitudinales dans la cloison mince de part et d'autre desdits bossages (34), la réaction des crayons combustibles (2) sur ces bossages (34) après leur mise en place dans la grille produisant un couple de torsion sur la languette de tôle élastique (32), la déformation de cette languette permettant ainsi l'absorption des tolérances de montage des crayons combustibles (2) dans la grille.

2. Grille d'espacement selon la revendication 1, caractérisée en ce que lesdits bossages profilés (34) sont associés aux seconds points d'appui (30) constitués par des bossages pratiqués directement dans la cloison mince constituant la paroi de l'alvéole (24), ces bossages (30) constituant donc des points d'appui rigides pour les crayons combustibles (2).

3. Grille d'espacement selon la revendication 2, caractérisée en ce que deux desdits seconds points d'appui ou bossages (30) sont disposés de part et d'autre, dans la direction longitudinale, d'un couple de deux desdits bossages profilés (34).

4. Grille d'espacement selon la revendication 1, caractérisée en ce que les languettes de tôle élastiques (32) présentent un cambrage obtenu à la fabrication, ce cambrage étant réalisé en sens inverse de la déformation que la languette élastique (32) aura à subir lors de la mise en place des crayons dans la grille.

## Claims

1. Spacer grid for the fuel assembly of a nuclear reactor, comprising an assembly of two groups of thin partitions (20, 22) which are respectively parallel in each group, and perpendicular to the members of the other group, forming cells (24) of square section each traversed by a fuel rod (2) of the bundle, first bearing points comprising bosses (34) formed in the walls of the cell (24) to hold the fuel rods of a bundle, said bosses (34) being directed in opposite directions in two adjacent cells (24), characterised in that it comprises second bearing points (30) also formed in the walls of the cell (24) to support the fuel rods of the bundle, and in that said bosses (34) are shaped and formed in pairs in the longitudinal direction on a tongue (32) formed by cutting two longitudinal parallel slits (33) in the thin partition on either side of said bosses (34), the force exerted by the fuels rods (22) on the bosses (34) after they have positioned in the grid, producing a torsion couple on the elastic tongue (32), the deformation of said tongue thereby permitting absorption of the mounting tolerances of fuel rods (2) in the grid.

2. Spacer grid according to Claim 1, characterised in that said shaped bosses (34) are associated with second bearing points (30) constituted by bosses formed directly in the thin partition constituting the wall of the cell (24), said bosses (30) thereby constituting rigid bearing points for the fuel rods (2).

3. Spacer grid according to Claim 2, characterised in that said second bearing points or bosses (30) are located on either side in the longitudinal direction of a pair of said shaped bosses (34).

4. Spacer grid according to Claim 1, characterised in that the elastic tongues (32) have a camber produced during their manufacture, said camber being in the reverse direction to the deformation of the elastic tongue (32) produced during the positioning of rods in the grid.

## Patentansprüche

1. Abstandshalter für ein Kernreaktorbrennelementbündel mit zwei Gruppen dünner Wände (20, 22), die jeweils in jeder Gruppe parallel zueinander und zu den jenigen der anderen Gruppe senkrecht sind, wodurch Zellen (24) mit quadratischem Querschnitt festlegbar sind, von denen jede von einem Brennstab (2) des Bündels durchquert ist, mit ersten Stützpunkten, die von in den Wänden der Zelle (24) ausgebildeten Buckeln (34) gebildet sind, um die Brennstäbe des Bündels zu halten, wobei diese Buckel (34) in zwei benachbarten Zellen (24) einen entgegengesetzen Sinn aufweisen, dadurch gekennzeichnet, daß der Abstandshalter zweite Stützpunkte (30) aufweist, die ebenfalls in den Wänden der Zelle (24) ausgebildet sind, um die Brennstäbe des Bündels zu halten, und daß die Buckel (34) zu Paaren gepaart in Längsrichtung auf einem Blechstreifen (32) geformt und hergestellt sind, der dadurch erhalten wird, daß zwei parallele Längsschlitze (33) in die dünne Wand auf beiden Seiten der Buckel (34) eingeschnitten werden, und daß die Gegenwirkung der Brennstäbe (2) auf diese Buckel (34) nach ihrer Lageanordnung in dem Abstandshalter ein Drehmoment an dem elastischen Blechstreifen (32) erzeugt, wobei die Verformung dieses Streifens somit die Aufnahme der Einbautoleranzen der Brennstäbe (2) in dem Abstandshalter ermöglicht.

2. Abstandshalter nach Anspruch 1, dadurch gekennzeichnet, daß die geformten Buckel (32) den zweiten Stützpunkten (30) zugeordnet sind, die von den Buckeln gebildet sind, die unmittelbar in der dünnen Wand ausgebildet sind, welche die Wand der Zelle (24) bildet, wobei diese Buckel (30) daher feste Stützpunkte für die Brennstäbe (2) bilden.

3. Abstandshalter nach Anspruch 2, dadurch gekennzeichnet, daß zwei der zweiten Stützpunkte oder Buckel (30) auf beiden Seiten in Längsrichtung eines Paares von zwei geformten Buckel (34) angeordnet sind.

4. Abstandshalter nach Anspruch 1, dadurch gekennzeichnet, daß die elastischen Blechstreifen (32) eine bei der Herstellung erhaltenene Hohlprägung aufweisen, die im entgegengesetzten Sinn der Verformung ausgebildet ist, welche der elastische Streifen (32) erfährt, wenn die Brennstäbe in dem Abstandshalter in ihrer Lage angeordnet werden.

# FIG.1

# FIG.2

# FIG.3

## FIG. 4

# FIG. 5